# EUROPÄISCHE PATENTSCHRIFT

(11) **EP 2 105 702 B1**
(45) Veröffentlichungstag und Bekanntmachung des Hinweises auf die Patenterteilung: **06.10.2010**
(21) Anmeldenummer: 09003525.4
(22) Anmeldetag: 11.03.2009
(51) Int. Cl.: G01B 11/26, G01S 5/16, B60W 30/06

(54) **Verfahren zur Bestimmung der Fahrbahnebene einer Parklücke**
Method for determining the road surface of a parking space
Procédé de détermination de la surface de bande de transport d'un espace de stationnement

(30) Priorität: 28.03.2008 DE 102008016337; 18.12.2008 DE 102008062708
(43) Veröffentlichungstag der Anmeldung: 30.09.2009
(73) Patentinhaber: VOLKSWAGEN AG, 38436 Wolfsburg (DE)
(72) Erfinder: Auer, Richard, Dr., 38442 Wolfsburg (DE); Brosig, Stefan, Dr., 29386 Hankensbüttel (DE); Mossau, Daniel, 38448 Wolfsburg (DE); Rosebrock, Dennis, 38114 Braunschweig (DE); Spehr, Jens, 38226 Salzgitter (DE)
(74) Vertreter: Meyer, Enno

(56) Entgegenhaltungen:
- EP-A- 1 801 613
- DE-A1-102005 003 191
- DE-A1-102005 023 177
- ERIC WAHL ET AL.: "Realisierung eines Parkassistenten basierend auf Motion-Stereo" AACHENER KOLLOQUIUM FAHRZEUG- UND MOTORENTECHNIK, Bd. 16, 10. Oktober 2007 (2007-10-10), Seiten 871-880, XP008108847 Aachen, Germany
- LABAYRADE R ET AL: "Real time obstacle detection in stereovision on non flat road geometry through V-disparity representation" 17. Juni 2002 (2002-06-17), INTELLIGENT VEHICLE SYMPOSIUM, 2002. IEEE JUN 17-21, 2002, PISCATAWAY, NJ, USA,IEEE, PAGE(S) 646 - 651 , XP010635896 ISBN: 978-0-7803-7346-4 * das ganze Dokument *
- GALLO O ET AL: "Robust curb and ramp detection for safe parking using the Canesta TOF camera" 23. Juni 2008 (2008-06-23), COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, PAGE(S) 1 - 8 , XP031285721 ISBN: 978-1-4244-2339-2 * Zusammenfassung * * Spalten 1-4; Abbildung 1 * * Spalten 9-12; Abbildung 5 *
- THAO DANG: "Fahrbahnebenenschätzung mittels V-disparity" STUDIENARBEIT BESCHREIBUNG, INSTITUT FÜR MESS- UND REGELUNGSTECHNIK, UNIVERSITÄT KARLSRUHE, [Online] 28. August 2007 (2007-08-28), XP002540252 Karlsruhe, Germany Gefunden im Internet: URL:http://www.mrt.uni-karlsruhe.de/1186.p hp> [gefunden am 2009-08-05]

## Beschreibung

Die Erfindung betrifft ein Verfahren zur Bestimmung der Fahrbahnebene in der Umgebung eines Kraftfahrzeugs mittels einer kamerabasierten Erfassung von Umfelddaten gemäß Anspruch 1, eine Verwendung des Verfahrens in einem Parkassistenten eines Kraftfahrzeugs gemäß Anspruch 6 sowie ein Parkassistent gemäß Anspruch 7.

Parkassistenzsysteme und Verfahren zum unterstützenden oder autonomen Einparken von Kraftfahrzeugen in Parklücken sind teilweise bereits in Serienfahrzeugen als Sonderausstattung erhältlich oder befinden sich in der Entwicklung. Derartige Systeme basieren auf einer Umfelderkennung mittels geeigneter Sensoren, beispielsweise Ultraschallsensoren, Radarsensoren oder kamerabasierte Systeme, zur Detektion und Bestimmung von möglichen Parklücken.

Ein derartiges Verfahren zum Erfassen von Objekten in der Umgebung eines Fahrzeugs ist beispielsweise aus der EP 1801613 A2 bekannt. Dieses bekannte Verfahren erfasst Objekte insbesondere in der Umgebung eines Fahrzeugs mittels mehrerer Abstandssensoren, basierend auf Ultraschall, und kann zur Detektion von parkenden Fahrzeugen, Bordsteinen und Parklücken herangezogen werden. Die von den Sensoren ermittelten Abstandssignale werden von einer geeigneten Steuerung von einem Parklenk-Assistenten zur Unterstützung des Fahrers bei einem Einparkvorgang in eine detektierte Parklücke verwendet. Ferner können die Sensorsignale für die Parkdistanzkontrolle eingesetzt werden.

Ein weiteres Verfahren zur Fahrerunterstützung ist aus der DE 102005023177 A1 bekannt, bei dem die Fahrzeugumgebung mittels geeigneter Sensoren erfasst und aus den Signalen mögliche Parklücken bestimmt werden. Bei einer Anforderung einer Fahrerunterstützung wird eine Zielposition des Fahrzeugs in der Parklücke angegeben, welche das Fahrzeug erreichen kann. Diese Zielposition kann vom Fahrer innerhalb der berechneten Parklücke in gewissen Grenzen verändert und damit vom Fahrer vorgegeben werden.

Ein weiteres Verfahren zur Realisierung eines Parkassistenten ist dem Artikel E. Wahl et al.: "Realisierung eines Parkassistenten basierend auf Motion-Stereo", 16. Aachener Kolloquium Fahrzeug- und Motorentechnik, 2007, S. 871-880, zu entnehmen, bei welchem die Parklückenvermessung durch ein videobasiertes Verfahren, das sich auf Motion-Stereo stützt, vermessen wird. In einem ersten Modus wird die Parklücke vermessen und ihre Länge bestimmt, und der zweite Modus dient der verfeinerten Rekonstruktion der Fahrumgebung beim Zurücksetzen in die Parklücke.

Bei all den bekannten Verfahren wird davon ausgegangen, dass die Fahrzeugebene und die Fahrbahnebene stets parallel zu einander sind und den gleichen Abstand zu einander haben. Dieser Abstand wird durch einmaliges Vermessen ermittelt, und diese Information wird in dem bekannten Verfahren benutzt, um Abstände und relative Lagen von Hindernissen und Parklücken bezüglich des Fahrzeugs, d.h., bezüglich der Fahrzeugebene, zu ermitteln. Sollten jedoch Fahrzeug- und Fahrbahnebene nicht parallel sein, so werden bei der Parklückenvermessung die genannten Abstände und relative Lagen bezüglich des Fahrzeugs bei einer kamerabasierten Parkumfelddetektion mittels Motion-Stereo falsch ermittelt. Gleiches gilt, wenn der durch die Kamera erfasste Bereich sich nicht auf gleicher Höhe mit der momentanen Fahrbahnebene befindet, wie dies beispielsweise aufgrund von Bordsteinen vorkommen kann. Werden die ermittelten dreidimensionalen Umfelddaten nun dazu benutzt, um beispielsweise Einparkvorgänge zu planen, sind diese Operationen nicht exakt ausführbar, und es kann im schlimmsten Fall zu Kollisionen kommen, falls die Voraussetzung der Parallelität von Fahrzeugebene und Fahrbahnebene nicht gegeben ist.

Der Erfindung liegt daher die Aufgabe zugrunde, die tatsächliche Fahrbahnebene im Umfeld eines Kraftfahrzeugs zu ermitteln und einen verbesserten Parkassistenten, basierend auf der tatsächlich ermittelten Fahrbahnebene, zu schaffen.

Diese Aufgabe wird durch ein Verfahren zur Bestimmung der Fahrbahnebene in der Umgebung eines Kraftfahrzeugs mittels einer kamerabasierten Erfassung von Umfelddaten mit den Merkmalen des Anspruchs 1 sowie eine Verwendung des Verfahrens in einem Parkassistenten mit den Merkmalen des Anspruchs 7 und einem Parkassistenten mit den Merkmalen des Anspruchs 8 gelöst. Bevorzugte Ausgestaltungen der Erfindung sind Gegenstand der Unteransprüche.

Das erfindungsgemäße Verfahren zur Bestimmung der Fahrbahnebene in der Umgebung eines Kraftfahrzeugs mittels einer kamerabasierten Erfassung und Auswertung von Umfelddaten weist die folgenden Schritte auf:
- Bestimmung bodennaher, insbesondere Punkte auf der Oberfläche der Fahrbahn, in der Umgebung des Fahrzeugs,
- Bestimmung einer virtuellen Ebene aus den bodennahen Punkten,
- Vergleichen der virtuellen Ebene mit der aus der Fahrzeugebene abgeleiteten angenommenen Fahrbahnebene, und
- Identifizierung der virtuellen Ebene als Fahrbahnebene, wenn die Winkeldifferenz zwischen der angenommenen Fahrbahnebene und der virtuellen Fahrbahnebene größer als ein vorbestimmter Wert ist.

Trifft die letzte Bedingung nicht zu, d.h., ist die Winkeldifferenz zwischen der aus der Fahrzeugebene resultierenden angenommenen Fahrbahnebene und der virtuellen Fahrbahnebene kleiner bzw. gleich dem genannten vorbestimmten Wert, so wird die angenommene Fahrbahnebene als Fahrzeugebene betrachtet. Vorzugsweise beträgt der vorbestimmte Wert 1°. Mittels der Bestimmung einer virtuellen Ebene aus von der Kamera gemessenen 3D-Punkten auf der Oberfläche kann entschieden werden, ob die Fahrbahnebene mit der angenommenen Fahrbahnebene übereinstimmt, mit anderen Worten, ob die Fahrbahnebene horizontal verläuft ist, oder ob sie ansteigt. Die gleiche Überlegung gilt natürlich auch für abfallende Parklücken.

Vorzugsweise wird die Fahrbahnebene einer möglichen Parklücke erfasst, die gegebenenfalls zum Einparken des Fahrzeugs geeignet wäre. Dadurch wird erreicht, dass eine ansteigende oder abfallende Fahrbahnebene einer Parklücke nicht als Hindernis gewertet wird, sondern aufgrund der vermessenen Steigung überhaupt erst als Parklücke erkannt werden kann.

Insbesondere wird durch die Bestimmung der virtuellen Fahrbahnebene der Neigungswinkel der Fahrbahnebene gegenüber der horizontalen bestimmt, da angenommen wird, dass die angenommene Fahrbahnebene üblicherweise mit der Horizontalen übereinstimmt.

Vorzugsweise kann die virtuellen Ebene einen maximalen Neigungswinkel gegenüber der angenommenen Fahrbahnebene annehmen. Übersteigt daher der Betrag des Neigungswinkels der virtuellen Ebene den maximalen Neigungswinkel, so wird die virtuelle Ebene als Hindernis betrachtet und scheidet als möglicher Parkplatz aus. Dabei beträgt der Betrag des maximale Neigungswinkels vorzugsweise 10°. Mit anderen Worten, übersteigt der Neigungswinkel der virtuellen Ebene den Wert von +10° für eine ansteigende Fläche oder unterschreitet der Neigungswinkel der virtuellen Ebene den Wert von -10° für eine abfallenden Fläche, so ist wegen zu starker Neigung der potentiellen Parklücke ein sicheres Parken nicht mehr möglich und die Fläche kann als potentielle Parklücke ausgeschlossen werden.

Vorzugsweise wird die Fahrbahnebene seitlich des Fahrzeugs bestimmt, da die Detektion möglicher Parkplätze üblicherweise beim Vorbeifahren des Fahrzeugs an den Parkplätzen vorgenommen wird.

Wie bereits im Vorangegangenen erwähnt, wird üblicherweise zuerst angenommen, dass Fahrzeugebene und Fahrbahnebene stets parallel sind und den gleichen Abstand zu einander haben. Dieser Abstand wird vorzugsweise durch einmaliges Vermessen der Lage der Fahrbahnebene bezüglich der Fahrzeugebene, d.h., bezüglich des Fahrzeugs, ermittelt.

Durch die Bestimmung der Neigung der Fahrbahn, d.h., der Neigung der möglichen Parklücke, kann die befahrbare Fläche einer Parklücke bestimmt werden. Dadurch wird ermöglicht, dass ein Parkassistent eine ansteigende Oberfläche einer Parklücke nicht als vermeintliches Hindernis, wie beispielsweise ein Bordstein oder ähnliches, klassifiziert, sondern durch die Zuordnung der virtuellen Fahrbahnebene zur tatsächlichen Fahrbahnebene wird vermutet, dass es sich um kein Hindernis handelt, sondern dass die Parklücke befahrbar ist. Durch die Begrenzung des Neigungswinkels auf einen maximalen bzw. minimalen Wert

Vorzugsweise wird das oben erläuterte Verfahren in einem Parkassistenten eines Kraftfahrzeugs verwendet, wobei der Parkassistent beispielsweise auf einer kamerabasierten Ermittlung von Umfelddaten in Motion-Stereo basiert und mögliche Parklücken ermittelt sowie einen automatischen Einparkvorgang durchführt. Dabei identifiziert der Parkassistent die virtuelle Ebene mit einer geneigten Oberfläche einer Parklücke, so dass auf diese Weise die befahrbare Fläche der Parklücke bestimmt werden kann.

Ein erfindungsgemäßer Parkassistent eines Kraftfahrzeugs umfasst mindestens eine Kamera zur Bestimmung von Umfelddaten des Kraftfahrzeugs, wobei mittels einer Berechnungseinheit durch Motion-Stereo-Betrachtung der Kameradaten möglicher Parklücken vermessen und identifiziert werden können. Ferner weist der erfindungsgemäße Parkassistent eine Einrichtung zur Bestimmung einer virtuellen Fahrbahnebene aus gemessenen oberflächennahen 3D-Punkten auf.

Eine bevorzugte Ausführungsform der Erfindung wird nachfolgend anhand der einzigen Zeichnung erläutert, wobei
Fig. 1 die Situation bei einer ansteigenden Parklücke gemäß dem Stand der Technik, und
Fig. 2 die Bestimmung der vermuteten befahrbaren Fläche der Parklücke darstellt.

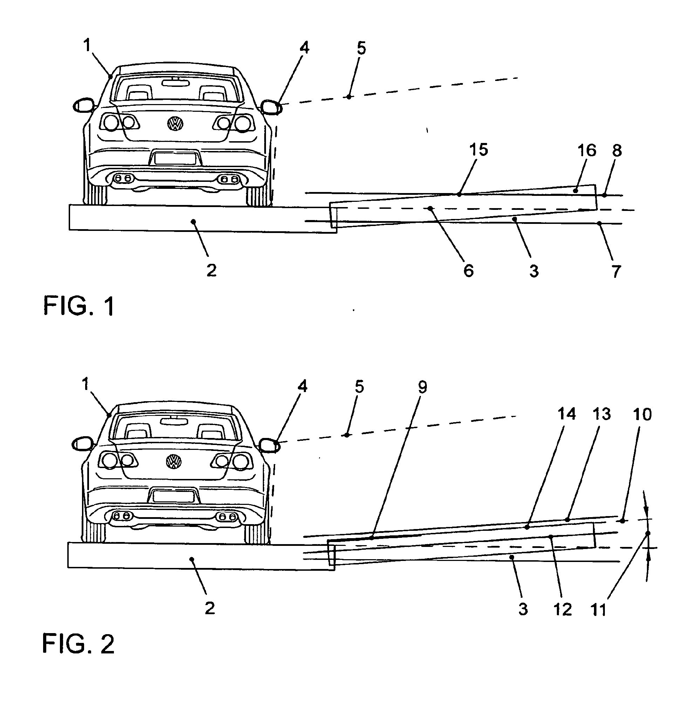

Fig. 1 zeigt ein Fahrzeug 1, welches auf einer Fahrbahn 2 an einer Parklücke 3 vorbeifährt und mittels einer seitlich angebrachten Kamera 4, vorzugsweise im Seitenspiegel, das Umfeld vermisst und die Umfelddaten auswertet. Dabei ist der Sichtbereich 5 der Kamera 4 durch die gestrichelten Ränder angedeutet. Weiter dargestellt ist die in die Parklücke 3 fortgesetzte angenommene Fahrbahnebene 6, die einmalig bezüglich der nicht dargestellten Fahrzeugebene bestimmt wird. Aufgrund der angenommenen Fahrbahnebene 6 wird vermutet, dass die Parklücke 3 innerhalb gewisser Abweichungen von der Fahrbahnebene 6 befahrbar ist, wobei die Abweichungen in der Höhe, d.h., die zulässigen Toleranzen, durch die Geraden 7 und 8 dargestellt sind. Wie aus Fig. 1 ersichtlich, ist die Parklücke 3, dargestellt durch die Fahrbahnebene 6, ansteigend. Dadurch schneidet die Oberfläche der Fahrbahnebene 6, mit anderen Worten die tatsächliche Fahrbahn der Parklücke 3, die zulässige Toleranzgerade 8 im Schnittpunkt 15, wodurch der Parkassistent den Fahrbahnabschnitt 16 der Parklücke 3 als vermeintliches Hindernis betrachtet und daher die Parklücke 3 zum Parken nicht freigibt.

Dem gegenüber zeigt Fig. 2 die Situation gemäß der Erfindung, wobei im Bereich 9 der Parklücke 3 von der Kamera 4 fahrbahnnahe 3D-Ebenen-Punkte ermittelt werden. Aus den ermittelten Ebenenpunkten wird eine virtuelle Fahrbahnebene 10 berechnet, die hier als Gerade in der Querschnittdarstellung dargestellt ist. Zwischen der angenommene Fahrbahnebene 6 und der virtuellen Fahrbahnebene 10 wird ein Neigungswinkel 11 bestimmt. Ist dieser Neigungswinkel 11 größer als ein vorgegebener Wert, beispielsweise 1°, so wird die virtuelle Fahrbahnebene 10 mit der tatsächlichen Fahrbahnebene der Parklücke 3 identifiziert, und es ergeben sich untere und obere Toleranzen 12 und 13 bezüglich der tatsächlichen Fahrbahnebene 10, die kleiner sind als diejenigen 7, 8 in Fig. 1. Das Parkassistenzsystem identifiziert nun die Oberfläche der tatsächlichen Fahrbahnebene als eine vermutete befahrbare Parklückenfläche 14, und die Parklücke 3 mit ihrer Neigungswinkel 11 wird als eine mögliche Parklücke gewertet. Der Betrag des Neigungswinkels 11 kann durch einen maximalen Wert begrenzt sein, da bei zu großer Steigung bzw. Gefälle ein sicheres Parken nicht möglich ist. Vorzugsweise beträgt der Betrag des maximalen Neigungswinkels 10°.

### BEZUGSZEICHENLISTE

- 1: Fahrzeug
- 2: Fahrbahn
- 3: Parklücke
- 4: Kamera
- 5: Sichtbereich (field of view)
- 6: angenommene Fahrbahnebene
- 7: untere Toleranzgerade
- 8: obere Toleranzgerade
- 9: Bereich fahrbahnnaher 3D-Ebenenpunkte
- 10: virtuelle Fahrbahnebene
- 11: Neigungswinkel
- 12: untere Toleranz der virtuellen Fahrbahnebene
- 13: obere Toleranz der virtuellen Fahrbahnebene
- 14: vermutete befahrbare Fläche
- 15: Schnittpunkt
- 16: vermeintliches Hindernis

## Patentansprüche

1. Verfahren zur Bestimmung der Fahrbahnebene in der Umgebung eines Kraftfahrzeugs (1) mittels einer kamerabasierten Erfassung von Umfelddaten,
**dadurch gekennzeichnet, dass**
in der Umgebung des Fahrzeugs (1) bodennahe Punkte bestimmt werden,
aus den bodennahen Punkten eine virtuelle Ebene (10) bestimmt wird,
die virtuelle Ebene mit der aus der Fahrzeugebene angenommenen Fahrbahnebene (6) verglichen wird, und
die virtuelle Fahrbahnebene (10) als Fahrbahnebene betrachtet wird, wenn die Winkeldifferenz (11) zwischen der angenommenen Fahrbahnebene (6) und der virtuellen. Fahrbahnebene (10) größer als eine vorbestimmter Wert ist.

2. Verfahren nach Anspruch 1, **dadurch gekennzeichnet, dass** die Fahrbahnebene einer Parklücke (3) bestimmt wird.

3. Verfahren nach einem der Ansprüche 1 oder 2, **dadurch gekennzeichnet, dass** der Neigungswinkel (11) der virtuellen Ebene ermittelt wird.

4. Verfahren nach Anspruch 3, **dadurch gekennzeichnet, dass** der Betrag des Neigungswinkels (11) kleiner oder gleich einem maximalen Neigungswinkel ist.

5. Verfahren nach einem der vorangegangenen Ansprüche, **dadurch gekennzeichnet, dass** die Fahrbahnebene (6) seitlich des Fahrzeugs bestimmt wird.

6. Verfahren nach einem der vorangegangenen Ansprüche, **dadurch gekennzeichnet, dass** die Lage der angenommen Fahrbahnebene zur Fahrzeugebene durch einmaliges Vermessen bestimmt wird.

7. Verwendung des Verfahrens nach einem der vorangegangenen Ansprüche in einem Parkassistenten eines Kraftfahrzeugs, **dadurch gekennzeichnet, dass** die befahrbare Fläche einer Parklücke mittels der Neigung der Parklücke bestimmt wird.

8. Parkassistent eines Kraftfahrzeugs (1) mit einer Kamera (4) zur Bestimmung der Umfelddaten des Kraftfahrzeugs (1), einer Berechnungseinheit zur Bestimmung möglicher Parklücken (3), einer Parkeinrichtung zum automatischen Ein-/Ausparken des Fahrzeugs und einer Einrichtung zur Durchführung des Verfahrens nach einem der Ansprüche 1 bis 5.

## Claims

1. Method for determining the plane of the carriageway in the surroundings of a motor vehicle (1) by means of camera-based acquisition of data on the surroundings,
**characterized in that**
points which are near to the ground are determined in the surroundings of the vehicle (1),
a virtual plane (10) is determined from the points which are near to the ground,
the virtual plane is compared with the plane (6) of the carriageway which is assumed on the basis of the plane of the vehicle, and
the virtual plane (10) of the carriageway is considered to be the plane of the carriageway if the angular difference (11) between the assumed plane (6) of the carriageway and the virtual plane (10) of the carriageway is greater than a predetermined value.

2. Method according to Claim 1, **characterized in that** the plane of the carriageway of a parking space (3) is determined.

3. Method according to one of Claims 1 and 2, **characterized in that** the angle (11) of inclination of the virtual plane is identified.

4. Method according to Claim 3, **characterized in that** the absolute value of the angle (11) of inclination is smaller than or equal to a maximum angle of inclination.

5. Method according to one of the preceding claims, **characterized in that** the plane (6) of the carriageway to the side of the vehicle is determined.

6. Method according to one of the preceding claims, **characterized in that** the position of the assumed plane of the carriageway with respect to the plane of the vehicle is determined by a single measurement.

7. Use of the method according to one of the preceding claims in a parking assistant of a motor vehicle, **characterized in that** the surface of a parking space which can be driven on is determined by means of the inclination of the parking space.

8. Parking assistant of a motor vehicle (1) having a camera (4) for determining the data on the surroundings of the motor vehicle (1), a computational unit for determining possible parking spaces (3), a parking device for automatically parking the vehicle/removing the vehicle from the parking space and a device for carrying out the method according to one of Claims 1 to 5.

## Revendications

1. Procédé pour déterminer le plan de la chaussée dans l'environnement d'un véhicule automobile (1) au moyen d'une acquisition par caméra de données d'environnement, **caractérisé en ce que** des points proches du sol sont déterminés dans l'environnement du véhicule (1),
un plan virtuel (10) est déterminé à partir des points proches du sol,
le plan virtuel est comparé avec le plan de la chaussée (6) supposé à partir du plan du véhicule, et
le plan virtuel de la chaussée (10) est considéré comme plan de la chaussée lorsque la différence angulaire (11) entre le plan supposé de la chaussée (6) et le plan virtuel de la chaussée (10) est supérieure à une valeur prédéfinie.

2. Procédé selon la revendication 1, **caractérisé en ce que** le plan de la chaussée dans un emplacement de stationnement (3) est déterminé.

3. Procédé selon l'une des revendications 1 ou 2, **caractérisé en ce que** l'angle d'inclinaison (11) du plan virtuel est déterminé.

4. Procédé selon la revendication 3, **caractérisé en ce que** la valeur de l'angle d'inclinaison (11) est inférieure ou égale à un angle d'inclinaison maximum.

5. Procédé selon l'une des revendications précédentes, **caractérisé en ce que** le plan de la chaussée (6) latéralement par rapport au véhicule est déterminé.

6. Procédé selon l'une des revendications précédentes, **caractérisé en ce que** la position du plan supposé de la chaussée par rapport au plan du véhicule est déterminée par une mesure unique.

7. Utilisation d'un procédé selon l'une des revendications précédentes dans un système d'assistance au stationnement d'un véhicule automobile, **caractérisée en ce que** la surface accessible au véhicule d'un emplacement de stationnement est déterminée au moyen de l'inclinaison de l'emplacement de stationnement.

8. Système d'assistance au stationnement d'un véhicule automobile (1) comprenant une caméra (4) pour déterminer les données d'environnement du véhicule automobile (1), une unité de calcul pour déterminer les emplacements de stationnement (3) possibles, un dispositif de stationnement pour automatiquement mettre en stationnement/sortir de stationnement le véhicule et un dispositif pour mettre en oeuvre le procédé selon l'une des revendications 1 à 5.
